(19) **Europäisches Patentamt**
European Patent Office
Office européen des brevets

(11) **EP 2 095 904 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(51) Int Cl.:
*B23K 26/06* (2006.01)   *B23K 26/38* (2014.01)
*B23K 15/00* (2006.01)   *B23K 15/08* (2006.01)

(21) Anmeldenummer: **09153442.0**

(22) Anmeldetag: **23.02.2009**

(54) **Optimiertes Bearbeiten einer Kontur mittels gepulstem Werkzeug**

Optimised contour machining with pulsed tool

Traitement optimisé d'un contour à l'aide d'un outil pulsé

(84) Benannte Vertragsstaaten:
**CH DE GB IT LI**

(30) Priorität: **27.02.2008 DE 102008011425**

(43) Veröffentlichungstag der Anmeldung:
**02.09.2009 Patentblatt 2009/36**

(73) Patentinhaber: **MTU Aero Engines AG**
**80995 München (DE)**

(72) Erfinder: **Geisel, Mark**
**82131 Gauting (DE)**

(56) Entgegenhaltungen:
**EP-A1- 0 460 338**    **DE-A1-102007 012 695**
**DE-B3-102005 047 328**

**Beschreibung**

Die Erfindung betrifft ein gepulstes Bearbeitungsverfahren zur optimierten Bearbeitung einer Kontur, wobei das gepulste Bearbeitungsverfahren insbesondere ein Laserverfahren wie das so genannte Trepanieren ist, und sich die Optimierung auf die Erzielung möglichst guter Bearbeitungsergebnisse wie insbesondere möglichst glatter Oberflächen bezieht, (siehe z.B. EP-A-0 460 338).

Zum Bearbeiten von Werkstoffen kommen zunehmend Laserstrahlen als Werkzeug zum Einsatz. Die Vorteile des Lasers liegen vor allem in dem fehlenden direkten Kontakt der Laseranlage mit dem Werkstück, woraus praktisch das Fehlen jeglichen Verschleißes resultiert. Weiter können durch eine entsprechende Fokussierung des Laserstrahls sehr kleine Löcher bzw. Löcher mit einem sehr großen Aspektverhältnis gebohrt werden.

Zum Bearbeiten von beispielsweise metallischen oder keramischen Materialien stehen eine Vielzahl unterschiedlicher Laserarten zur Verfügung, von denen einige im so genannten Dauerstrich-Betrieb, andere im so genannten gepulsten Betrieb arbeiten. Das erfindungsgemäße Verfahren betrifft Bearbeitungsverfahren des gepulsten Betriebes.

Da Laserstrahlen einen begrenzen Durchmesser besitzen, kann mit ihrer Hilfe nur dann ein Loch größeren Durchmessers als das des Strahls erzeugt werden, wenn der Strahl gleich einem Fräser auf einer Bahn, beispielsweise einer Kreisbahn, geführt wird, das Werkzeug also gewissermaßen in "Rotationen" mit einer Kreisfrequenz $f_{CNC}$ versetzt wird. Die Menge des bearbeiteten Materials bleibt dadurch gering, was in einer vertretbaren Erhöhung der Bearbeitungszeiten resultiert. Der unbearbeitete Materialausschnitt kann am Ende des Bearbeitungsprozesses aus der ausgeschnittenen Kontur herausgelöst werden. Dieser Bearbeitungsprozess wird in Verbindung mit einem gepulsten Werkzeug auch "Trepanieren" genannt.

Im gepulsten Betrieb sendet die Laseranlage nur kurze, aber sehr energiereiche Laserpulse der Frequenz $f_L$ aus. Aufgrund des lokal hohen Energieeintrags wird Material verdampft, im optimalen Fall entsteht also keine Schmelze, die ausgetrieben werden müsste und zu Verunreinigungen und einer Beeinträchtigung der Oberflächenqualität führen kann. Aber auch der Fall, dass das Material lediglich schmelzflüssig wird und ausgetrieben werden muss (beispielsweise durch den hohen Druckimpuls beim schlagartigen Erhitzen), ist in der Technik häufig anzutreffen und je nach zu bearbeitendem Material nicht vermeidbar oder gar gewünscht.

Beim Trepanieren stellt sich folgendes Problem:

Da der Durchmesser des Werkzeugs (gepulster Laserstrahl) in den meisten Fällen deutlich kleiner ist als der Durchmesser des zu bohrenden Loches bzw. die Abmaße der auszuschneidenden Kontur, kann ein vollständiges Ablösen des Materialausschnittes nur dann erfolgen, wenn alle durch die Pulse hervorgerufenen Materialabträge a) aneinander grenzen und b) durch die gesamte Materialstärke hindurch verlaufen.

Dies kann auf unterschiedliche Art und Weise erreicht werden:

- Anheben der Bearbeitungsfrequenz;

- sehr langsames, einmaliges Abfahren der Kontur, so dass jeder einzelne Abtrag den jeweils letzten teilweise überdeckt;

- mehrfaches Abfahren der gewünschten Kontur, so dass die Überdeckung nach einer gewissen Anzahl von "Umdrehungen" des Werkzeugs erreicht wird.

Bei jeder Rotation wird lediglich nur eine Schicht bestimmter Dicke abgetragen; durch wiederholtes Abfahren der Kontur, also mehrere Rotationszyklen, werden so viele Schichten wie nötig abgetragen, bis die Bearbeitung durch die gesamte Bauteildicke hindurch erfolgt ist.

Im ersten Fall existieren technische Grenzen, die nicht überschritten werden können. Außerdem geht dabei der Vorteil eines lokal eng begrenzten Wärmeeintrags verloren, der jedoch gerade in Hochpräzisionsanwendungen unverzichtbar ist, da sich das Werkstück häufig durch einseitigen Wärmeeintrag verzieht, was zu entsprechenden Abweichungen in der Bearbeitung führt. Auch existiert eine Reihe von Materialien (z.B. Keramiken), die nur durch sehr energiereiche Pulse abladierbar sind, wie sie Dauerstrichlaser nicht bereitstellen können.

Im zweiten Fall ergibt sich eine meist lange Bearbeitungsdauer; in Verbindung mit dem zuvor genannten Nachteil des einseitigen Wärmeeintrags führt diese Variante zu ungenügenden Ergebnissen.

Eine Vorgehensweise gemäß dem dritten Fall kann durchaus zu guten Resultaten führen, da hier der Wärmeeintrag gut verteilt wird, so dass Verzug des Bauteils keine oder nur eine untergeordnete Rolle spielt. Die Bearbeitungszeiten sind dabei von Wahl der Parameter (Pulsfrequenz $f_L$ des Werkzeugs; Rotationsfrequenz $f_{CNC}$ des Werkzeugs in Bezug auf die Kontur) abhängig, und nur dann ausreichend kurz, wenn bei einer möglicht geringen Anzahl von Rotationen eine möglichst gute Überdeckung der einzelnen Bearbeitungspulse erreicht wird. Die Einstellung dieser Parameter, insbesondere die Abstimmung von Rotationsfrequenz $f_{CNC}$ und Pulsfrequenz $f_L$ aufeinander, ist schwierig, da sie von der jeweiligen Bauteil und den Laserparametern abhängt und bisher beispielsweise mittels aufwändiger Berechnungen oder zeitintensiver Versuche ermittelt werden muss. Alternativ müssen unnötig lange Bearbeitungszeiten und/oder suboptimale Bearbeitungsergebnisse in Kauf genommen werden.

Die Aufgabe der Erfindung ist demnach die Bereitstellung eines gepulsten Bearbeitungsverfahrens zur optimierten Bearbeitung einer Kontur, insbesondere die Bereitstellung eines Verfahrens zur optimierten Abstimmung zwischen der Rotationsfrequenz $f_{CNC}$ und Pulsfrequenz $f_L$ eines gepulsten Bearbeitungsverfahrens.

Die Aufgabe wird durch das in Anspruch 1 vorgeschlagene Verfahren gelöst.

Weitere bevorzugte Ausführungsformen sind den abhängigen Ansprüchen sowie der nachfolgenden detaillierten Beschreibung zu entnehmen.

Die Erfindung stellt ein Verfahren bereit, mittels dessen das Frequenzverhältnis $\Phi = f_{CNC}/f_L$ derart optimiert werden kann, dass bei einer möglichst geringen Anzahl von Rotationen des Werkzeuges ein möglichst hoher Überdeckungsgrad der einzelnen Bearbeitungspulse erzielt wird. Dies wird besonders bevorzugt dadurch erreicht, dass das Verhältnis $\Phi$ irrational gewählt wird, das sich also $\Phi$ nicht durch das Verhältnis zweier ganzer Zahlen zueinander darstellen lässt.

Die folgenden Erläuterungen werden am Beispiel einer zu bearbeitenden Kreisbahn (kreisrunde Bohrung) dargelegt. Sie sind jedoch sinngemäß auch auf beliebige andere Konturen anwendbar.

Die zu bearbeitende Kreisbahn sei gekennzeichnet durch ihren Radius, der dem Bohrungsradius r entspricht. Das Werkzeug bewegt sich mit einer Vorschubgeschwindigkeit v auf dieser Bahn. Hieraus ergibt sich der Zusammenhang

$$f_{CNC} = v/2\pi r$$

für die Rotationsfrequenz des Werkzeugs.

Die diskrete Abfolge der Pulse kann dabei durch folgende Formel dargestellt werden:

$$x_i = r*\cos(2* \quad * \quad t_i) \quad \text{für} \quad t_i = 0, 1, 2, \ldots \qquad (1.1)$$

$$y_i = r*\sin(2* \quad * \quad t_i) \quad \text{für} \quad t_i = 0, 1, 2, \ldots \qquad (1.2)$$

$t_i$ ist hierbei der Laufindex für die Zeitpunkte, an denen ein Bearbeitungspuls abgegeben wird. $x_i$ und $y_i$ sind die entsprechenden Koordinaten im zweidimensionalen Raum Bei einer Variation des Frequenzverhältnisses treten in den Gleichungen 1.1 und 1.2 die unterschiedlichsten dynamischen Effekte in Erscheinung. Es können in Abhängigkeit von periodische, quasiperiodisch oder sogar deterministisch chaotische Bewegungsformen entstehen. Für die Erfindung sind dabei insbesondere die aperiodischen Prozesse von Bedeutung.

Es sei angemerkt, dass die Formeln 1.1 und 1.2 lediglich einen zweidimensionalen Schnitt (Poincare-Schnitt) des allgemeinen Bewegungsablaufes darstellen. Zur Beschreibung des gesamten dynamischen Systems wäre hingegen ein dreidimensionaler Phasenraum notwendig, da die Bewegung des quasiperiodischen Prozesses auf der Oberfläche eines Torus' stattfindet, welcher in einen dreidimensionalen Phasenraum eingebettet ist. Dabei ist zusätzlich zu beachten, dass die Forderung erfüllt ist, dass sich die Trajektorie der Bewegung des Prozesses nicht selbst schneidet (Überschneidungsfreiheit).

Das erfindungsgemäße Verfahren betrifft demnach ein gepulstes Bearbeitungsverfahren zur optimierten Bearbeitung einer Kontur, welches dadurch gekennzeichnet ist, dass das momentane Frequenzverhältnis aus $\Phi$ aus Pulsfrequenz des Werkzeugs $f_L$ und Rotationsfrequenz des Werkzeugs $f_{CNC}$ (also der Quotient aus $f_L$ und $f_{CNC}$) dahingehend optimiert wird, dass bei geringstmöglicher Bearbeitungsdauer und ohne ein direktes Aneinanderreihen der Bearbeitungspulse ein möglichst hoher Überdeckungsgrad einzelner Bearbeitungspulse erreicht wird.

Die Kontur kann dabei nach einer ersten Ausführungsform eine Kreisbahn, nach einer weiteren Ausführungsform eine regelmäßige Form wie z.B. die eines Quadrates oder eines Sterns, und nach anderen Ausführungsformen eine beliebige Form haben.

Nach einer Ausführungsform ist die Kontur offen. Nach einer bevorzugten Ausführungsform ist die Kontur in sich geschlossen.

Das Bearbeitungsverfahren zielt darauf ab, diese Kontur abzufahren und durch Abtragen des Materials ein Ausschneiden der Kontur zu bewirken, so dass im Falle einer in sich geschlossenen Kontur ein Herauslösen des von der Kontur umschlossenen Materials aus einem Gesamtverbund erfolgt. Dabei ist ein unmittelbares Aneinanderreihen der mittels Pulse erzeugten Materialabträge unerwünscht, da hieraus ein erhöhter lokaler Energieeintrag resultiert, woraus sich beispielsweise Verzug am zu bearbeitenden Bauteil ergeben kann.

Aufgrund der Pulshaftigkeit des Bearbeitungsverfahrens kann das gewünschte Ausschneiden nur dann erfolgen, wenn während der Bearbeitungsdauer an jeder Stelle, an welcher sich abzutragendes Material befindet, mindestens so viele Bearbeitungspulse der Frequenz $f_L$ eintreffen, dass die gesamte Schichtdicke des Materials abgetragen wird. Nach einer bevorzugten Ausführungsform treffen die Pulse räumlich verteilt auf, wobei nach Abschluss der Bearbeitung trotzdem an jeder Stelle, an welcher sich abzutragendes Material befindet, mindestens so viele Bearbeitungspulse der Frequenz $f_L$ eingetroffen sind, dass die gesamte Schichtdicke des Materials abgetragen wurde. Nach einer besonders bevorzugten Ausführungsform sind genau so viele Pulse wie nötig aufgetroffen, so dass sich eine Minimierung der Anzahl der Pulse und somit der Bearbeitungsdauer sowie eine Reduzierung des Bearbeitungstemperatur durch zeitliche und örtliche Verteilung des Energieeintrages ergibt.

Kennzeichnend für eine optimale Abstimmung zwischen den Parametern $f_L$ und $f_{CNC}$ ist das Verhältnis der beiden Parameter zueinander, welches als Frequenzverhältnis $\Phi$ bezeichnet wird. Das erfindungsgemäße Verfahren optimiert $\Phi$ derart, dass bei geringstmöglicher Bearbeitungsdauer und ohne ein direktes Aneinanderreihen der Bearbeitungspulse ein möglichst hoher Überdeckungsgrad einzelner Bearbeitungspulse erreicht wird.

Nach einer bevorzugten Ausführungsform des erfindungsgemäßen Verfahrens wird als Werkzeug ein Laser oder eine Elektronenstrahlquelle eingesetzt. Sowohl der Laser als auch die Elektronenstrahlquelle werden dabei gepulst betrieben, d.h. sie geben ihre Energie, die an einem Werkstück in Wärme umgewandelt wird und so zu Materialabtrag führt, nicht kontinuierlich, sondern in zeitlich diskreten "Pakten", also in Pulsform, ab.

Nach einer besonders bevorzugten Ausführungsform des erfindungsgemäßen Verfahrens ist das Frequenzverhältnis $\Phi$ irrational. $\Phi$ kann also nicht durch das Verhältnis zweier ganzer Zahlen dargestellt werden. Auf diese Weise wird sichergestellt, dass ein und dieselbe Stelle auf einer mit einem gepulsten Werkzeug abzufahrenden Kontur auch bei einem mehrfachen Abfahren der Kontur nur einen einzigen Bearbeitungspuls erfährt. Wäre hingegen $\Phi$ als rationale Zahl darstellbar, wäre $\Phi$ beispielsweise 0.1, und würde dieser Wert beispielsweise durch $f_{CNC}=1$ und $f_L=10$ zustande kommen, so würden sich zehn Bearbeitungspulse gleichmäßig auf der Kontur verteilen, und nach einer Umdrehung des Werkzeugs bzw. des Werkstücks würde der elfte Puls an der gleichen Stelle wie der erste Puls eintreffen, was erfindungsgemäß unerwünscht ist, da aus einer derartigen vollen Überdeckung der Bearbeitungspulse schlechte Bearbeitungsergebnisse, bis hin zu einer Unmöglichkeit der Bearbeitung, resultieren. Diese Unmöglichkeit ergibt sich dadurch, dass selbst bei unbegrenzter Bearbeitungsdauer bestimmte Stellen der Kontur beliebig oft, andere jedoch nie erreicht werden, so dass die Kontur niemals vollständig abgetragen wird, was im Falle einer in sich geschlossenen Kontur auch kein vollständiges Ablösen des Materialausschnittes erlaubt.

Nach einer besonders bevorzugten Ausführungsform ist die Kreiszahl Pi als Produkt aus dem Frequenzverhältnis $\Phi$ und einer (anderen,) rationalen Zahl darstellbar. Die Zahl Pi ist also in $\Phi$ enthalten, und $\Phi$ kann nach einer weiteren Ausführungsform auch gerade Pi selber sein; die andere, rationale Zahl wäre dann gerade 1.

Nach einer weiteren besonders bevorzugten Ausführungsform ist die Eulersche Zahl als Produkt aus dem Frequenzverhältnis $\Phi$ und einer (anderen,) rationalen Zahl darstellbar.Nach noch einer weiteren besonders bevorzugten Ausführungsform ist die "goldene Zahl" als Produkt aus dem Frequenzverhältnis $\Phi$ und einer (anderen,) rationalen Zahl darstellbar. Die "Goldene Zahl" ergibt sich dabei aus dem so genannten "Goldenen Schnitt". Demnach stehen zwei Strecken genau dann im Verhältnis des Goldenen Schnittes zueinander, wenn sich die größere Strecke zur kleineren Strecke wie die Summe aus beiden Strecken zur größeren Strecke verhält. Dieses Verhältnis wird "Goldene Zahl" genannt, sie beträgt (auf drei Stellen gerundet) 1,618.

Gemäß der Erfindung kann gezeigt werden, dass für eine endliche Anzahl von Konturumrunden *U* immer ein gleichmäßiges *l* erreicht wird, wenn

$$\phi = \frac{U}{k}$$

mit $U, k \in \mathbb{N}$ und teilerfremd

Diese Ausgestaltungsform bietet den Vorteil, dass der Abstandl zwischen zwei Bearbeitungspulsen unmittelbar vorgegeben werden kann, was aus technologischer Sicht wünschenswert ist.

Die bisherigen Darstellungen gingen davon aus, dass sich das Werkzeug entlang der Kontur bewegt und das Werkstück feststeht. Nach einer anderen Ausführungsform des erfindungsgemäßen Verfahrens bewegt sich hingegen anstelle des Werkzeugs das Werkstück. Insbesondere bei einer einfachen Kreisbahn als Kontur ist es vorteilhaft, wenn sich das Werkstück anstelle des Werkzeugs dreht; dies insbesondere, wenn das Werkstück rotationssymmetrisch ist oder gar einen runden Querschnitt besitzt. Alle genannten Ausführungsformen sind ohne Einschränkung auch für die hier genannte Ausführungsform gültig.

Nach einer weiteren Ausführungsform bewegen sich sowohl das Werkzeug als auch das Werkstück relativ zueinander. Entscheidend ist lediglich, dass bei einem mehrmaligen Abfahren der Kontur diese jedes Mal wieder exakt getroffen wird.

Alle Figuren zeigen die Einwirkorte von Bearbeitungspulsen, die auf einer Kreisbahn mit dem Radius 0,25 mm liegen. Die Pulse wurden von einem Laser abgegeben. Die Gesamtzahl der Bearbeitungspulse jeder Figur ist 150, die Pulsfrequenz $f_L$ ist 15 Pulse/Sekunde.

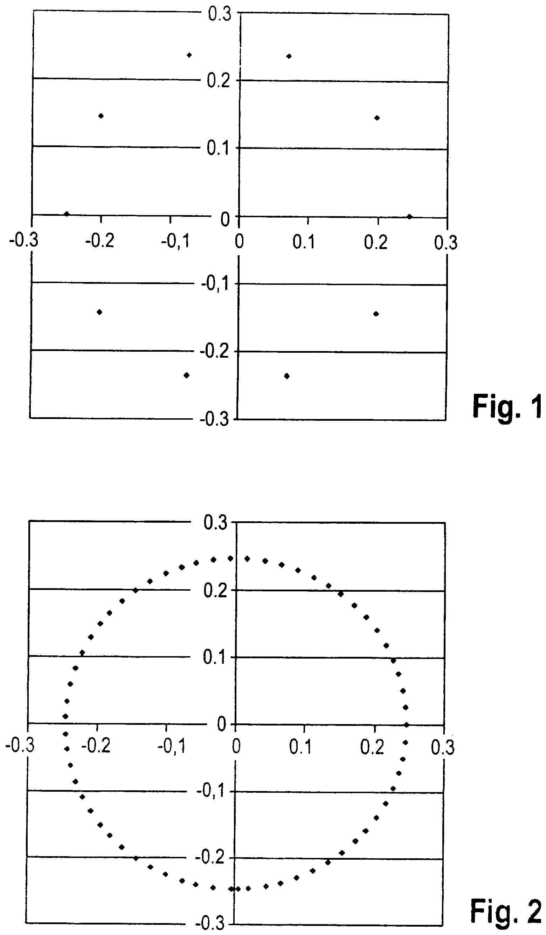

Die **Figur 1** zeigt die Lage der Bearbeitungspulse bei einem Frequenzverhältnis $\Phi$ von 10. Alle Pulse verteilen sich auf 10 Einwirkorte, die durch dunkel gefärbte Punkte gekennzeichnet sind. Obwohl insgesamt 150 Einzelpulse abgegeben wurden, ist die Überdeckung so hoch, dass die Pulse immer wieder die gleichen Stellen treffen und der größte Teil der Kontur, die hier kreisförmig ist, praktisch niemals bearbeitet wird.

In der **Figur 2** hingegen beträgt das Frequenzverhältnis $\Phi$ 31,5, ist also noch nicht irrational, die Bearbeitung zeigt jedoch bereits ein deutlich verbessertes Ergebnis. Der Wert für $\Phi$ wurde mittels zeitaufwändiger Versuche ermittelt.

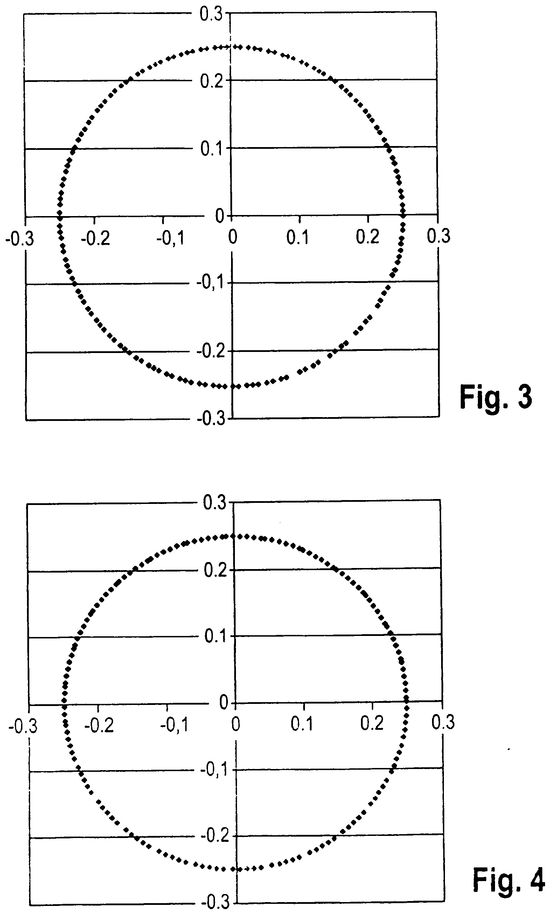

Die **Figur 3** schließlich zeigt das Bearbeitungsergebnis für einen geringfügig anderen Wert des Frequenzverhältnisses $\Phi$. Es beträgt im dargestellten Fall gerade 10*Pi. Trotz der sehr geringen Änderung, die in diesem Fall aufgrund einer Änderung der Vorschubgeschwindigkeit v um ca. 1% erfolgte, ist wiederum eine deutliche Verbesserung des Bearbeitungsergebnisses erkennbar. Hier ist $\Phi$ bereits eine irrationale Zahl, nämlich ein Vielfaches der Kreiszahl Pi. Im dargestellten Fall musste das optimale Frequenzverhältnis $\Phi$ also nicht wie zuvor mittels Versuchen gefunden werden, sondern konnte anhand der erfindungsgemäßen Lehre direkt ermittelt werden. Hieraus resultieren sowohl eine erhebliche Zeitersparnis, als auch verbesserte Bearbeitungsergebnisse, da die Bearbeitungspulse viel besser entlang der Kontur verteilt sind, sowie kürzere Bearbeitungszeiten, da aufgrund der besseren Verteilung weniger Rotationen von Werkzeug relativ zum Werkstück notwendig sind, um alle gewünschten Stellen auch ausreichend oft zu erreichen.

Analog zu Figur 3 zeigt die **Figur 4** das Bearbeitungsergebnis für den Fall, dass anstelle der Kreiszahl Pi die Eulersche Zahl e als Grundlage des Frequenzverhältnisses $\Phi$ dient. Auch hier ist die im Vergleich zu den in den Figuren 1 und 2 dargestellten Bearbeitungsergebnissen signifikante Verbesserung deutlich sichtbar. Die Überdeckung der Bearbeitungspulse bei Anwendung des erfindungsgemäßen Verfahrens ist hoch effizient, da die Pulse einer Rotation sich nicht überdecken, jedoch nach einigen Rotationen (dargestellt sind hier ca. 10 Rotationen) bereits eine gute und gleichmäßige Abdeckung der gesamten zu bearbeitenden Kontur zeigen.

Beispielergebnis für eine optimierte Bearbeitungsvariante nach Anspruch 8.

## Patentansprüche

1. Gepulstes Bearbeitungsverfahren zur Bearbeitung einer Kontur eines Werkstücks mit einem Strahlwerkzeug, wobei das momentane Frequenzverhältnis $\Phi$ aus Pulsfrequenz des Werkzeugs fL und Rotationsfrequenz des Werkzeugs $f_{CNC}$ zum Umfahren einer vorgegebenen Werkstückkontur derart eingestellt wird, dass ein Überdeckungsgrad einzelner Bearbeitungspulse bei einer Anzahl von Rotationen des Werkzeugs erfolgt, **dadurch gekennzeichnet, dass** das Frequenzverhältnis $\Phi$ als eine irrationale Zahl eingestellt wird oder das Frequenzverhältnis aus dem Quotienten U/k ermittelt wird, wobei U, k $\in$ N und teilerfremd sind.

2. Verfahren nach Anspruch 1, bei dem als Werkzeug ein Laser oder eine Elektronenstrahlquelle eingesetzt wird.

3. Verfahren nach Anspruch 1 oder 2, bei dem das Frequenzverhältnis $\Phi$ als der Quotient aus der Kreiszahl Pi und einer rationalen Zahl eingestellt wird.

4. Verfahren nach Anspruch 1 oder 2, bei dem das Frequenzverhältnis $\Phi$ als der Quotient aus der Eulerschen Zahl e und einer rationalen Zahl eingestellt wird.

5. Verfahren nach Anspruch 1 oder 2, bei dem das Frequenzverhältnis $\Phi$ als der Quotient aus der "Goldenen Zahl"" und einer rationalen Zahl eingestellt wird.

6. Verfahren nach einem der vorherigen Ansprüche, bei dem sich das Werkzeug oder das Werkstück bewegt.

7. Verfahren nach einem der vorherigen Ansprüche, bei dem sich sowohl das Werkzeug als auch das Werkstück relativ zueinander bewegen.

8. Computerprogramm zur Ausführung auf einen Rechner, welches die Durchführung des Verfahrens nach einem der Asprüche 1-7 erlaubt.

9. Datenträger, der ein Computerprogramm gemäß Ansprüche 8 umfasst.

**Claims**

1. A pulsed processing method for processing a contour of a workpiece using a beam tool, wherein the instantaneous frequency ratio $\Phi$ between the pulse frequency of the tool $f_L$, and the rotation frequency of the tool $F_{CNC}$ for traversing around a specified workpiece contour is adjusted such that a degree of coverage of individual processing pulses at a number of rotations of the tool is carried out, **characterised in that** the frequency ratio $\Phi$ is adjusted as an irrational number or the frequency ratio is determined from the quotient U/k, wherein U, k $\in$ N and are relatively prime.

2. The method as claimed in claim 1, wherein a laser or an electron beam source is used as the tool.

3. The method as claimed in claim 1 or 2, wherein the frequency ratio $\Phi$ is adjusted as the quotient of the number Pi and a rational number.

4. The method as claimed in claim 1 or 2, wherein the frequency ratio $\Phi$ is adjusted as the quotient of the Euler's number e and a rational number.

5. The method as claimed in claim 1 or 2, wherein the frequency ratio $\Phi$ is adjuster as the quotient of the "olden number" and a rationale number.

6. The method as claimed in any one of the preceding claims, wherein the tool or the workpiece moves.

7. The method as claimed in any one of the preceding claims, wherein both the tool and the workpiece move relative to each other.

8. A computer program to be executed on a computer, which allows the method as claimed in any one of claims 1-7 to be carried out.

9. A data carrier comprising a computer program as claimed in claim 8.

**Revendications**

1. Procédé d'usinage pulsé pour usiner un contour d'une pièce à l'aide d'un outil à faisceau, le rapport de fréquence instantané $\Phi$ de vitesse de l'outil $f_L$ et de la fréquence de rotation de l'outil $f_{CNC}$ est réglé pour suivre un contour prédéterminé de la pièce de façon à effectuer un degré de chevauchement d'impulsions d'usinage individuelles pour un certain nombre de rotations de l'outil, **caractérisé en ce que** le rapport de fréquence $\Phi$ est défini comme étant un nombre irrationnel ou le rapport de fréquence est défini comme étant le quotient Ü/k, U, k $\in$ N et étant premiers entre eux.

2. Procédé selon la revendication 1, dans lequel un laser ou une source de faisceau d'électrons est utilisé comme outil.

3. Procédé selon la revendication 1 ou 2, dans lequel le rapport de fréquence $\Phi$ est défini comme étant le quotient du nombre Pi et d'un nombre rationnel.

4. Procédé selon la revendication 1 ou 2, dans lequel le rapport de fréquence $\Phi$ est défini comme étant le quotient du nombre d'Euler e et d'un nombre rationnel .

5. Procédé selon la revendication 1 ou 2, dans lequel le rapport de fréquence $\Phi$ est défini comme étant le quotient du « nombre d'or » et d'un nombre rationnel .

6. Procédé selon l'une des revendications précédentes, dans lequel l'outil ou la pièce se déplace.

7. Procédé selon l'une des revendications précédentes, dans lequel l'outil et la pièce se déplacent l'un par rapport à l'autre.

8. Programme informatique destiné à être exécuté sur un ordinateur, lequel programme informatique permet la mise en oeuvre du procédé selon l'une des revendications 1 à 7.

**9.** Support de données qui comprend un programme informatique selon la revendication 8.

Fig. 1

Fig. 2

Fig. 3

Fig. 4

**Eingabewerte**

| | |
|---|---|
| Bohrungsdurchmesser in mm | 1 |
| Laserstrahldurchmesser in mm | 0.1 |
| Rundenzahl | 2 |
| Laserstrahlfrequenz in Hz | 15 |
| Vorschub in mm/min | 150 |

**Simulation**

**Aktuelle Verteilung**

1.Vorschlag 152.834 mm/min

2.Vorschlag 144.997 mm/min

**Optimiert mit 1. neuen Vorschub**

**Optimiert mit 2. neuen Vorschub**

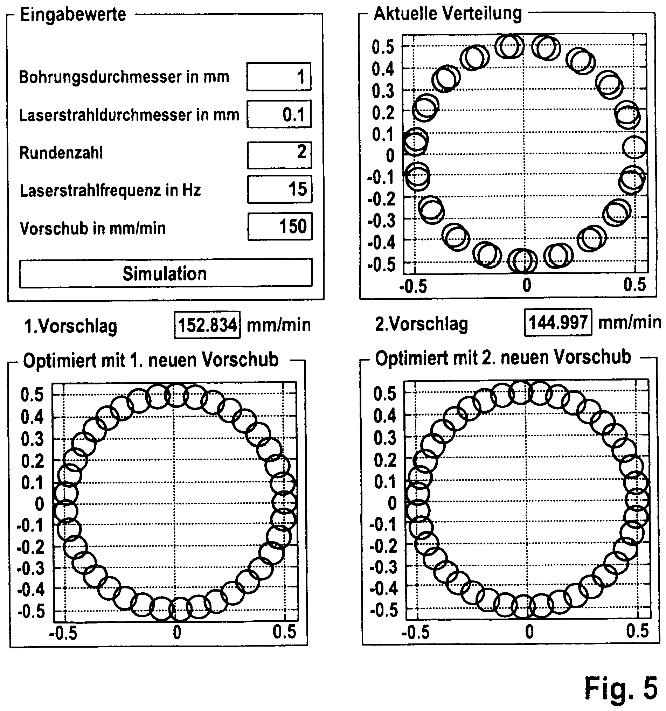

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0460338 A